# EUROPÄISCHE PATENTANMELDUNG

(11) **EP 1 707 050 A1**
(43) Veröffentlichungstag der Anmeldung: **04.10.2006**
(21) Anmeldenummer: 05006743.8
(22) Anmeldetag: 29.03.2005
(51) Int. Cl.: A01K 1/03

(54) **Automatisch beheizte Hunde oder Katzen Hütte**

(71) Anmelder: Vlach, Ingrid, 1170 Wien (AT)
(72) Erfinder: Vlach, Ingrid, 1170 Wien (AT)

(57) **Zusammenfassung**

Die automatische Beheizung einer Hunde oder Katzenhütte, mittels E - Heizung und Thermostat samt Steuerung (Lichtschranke).

## Beschreibung

Die Erfindung betrifft die Einheit einer Hunde - oder Katzenhütte mit einer Elektroheizung.
A., Die Hunde - oder Katzenhütte kann aus Holz oder Kunststoff sowie allen witterungsbeständigen Materialien ausgeführt werden.
B., Vor beschriebene Hütte kann auch zweischalig mit einer dazwischen liegenden Wärmeisolierung (Styropor - b. z. w. Steinwollplatten oder gleichwertiges Material) ausgeführt werden.
C., Lt. Skizze (1. b) : wird eine Trennwand von Fußboden bis Dach, jedoch mit zwei 2,0 cm breiten Lüftungsschlitz welche seitlich angeordnet sind, fix montiert.
D., Lt. Skizze (1. c und 1. d) : wird die Rückwand der Hütte mit einer dicht schließenden Drehtüre ausgeführt, auf welcher die E - Heizung montiert ist.
   Die Drehtüre auf 2 Bänder gesteckt und einem Tosischen Schloss beschlagen.
E., Die Elektroheizung wird mittels Thermostat gesteuert. Das Ein - und Ausschalten des Heizgerätes erfolgt mit Hilfe eines "Lichtschranken" welcher ca.. 4,0 cm über dem Boden der Hütte angeordnet ist.
   1. Möglichkeit: wenn der Lichtschranken (durch das Haustier) nicht unterbrochen wird, bleibt das Heizgerät abgeschaltet.
   2. Möglichkeit: wenn der Lichtschranken unterbrochen wird, schaltet sich die E - Heizung ein und mittels Thermostat die richtige gleich bleibende Temperatur.

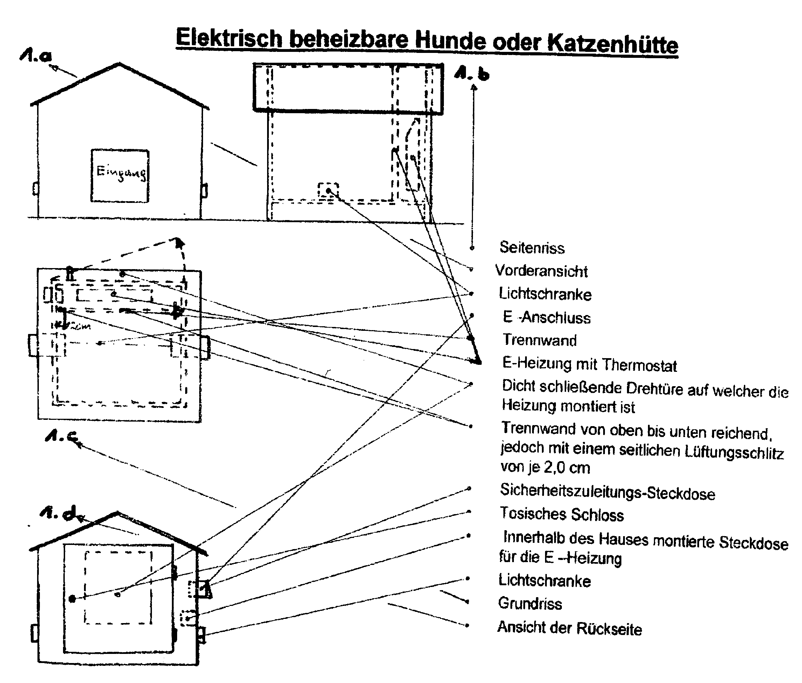

## Patentansprüche

1. **Der Patentanspruch ist gekennzeichnet durch:**
Die komplette Einheit einer Hütte für Hunde und Katzen mit installierter voll automatischer Steuerung der E - Heizung.
Unter der Steuerung versteht man die Überwachung mittels eines Lichtschranken, ob das Haustier sich in - oder außerhalb der Hütte befindet, sowie die Temperaturregelung mit einem Thermostat, um eine gleichmäßig hohe Temperatur zu erreichen.
